# EUROPEAN PATENT SPECIFICATION

(11) **EP 3 831 244 B1**
(45) Date of publication and mention of the grant of the patent: **04.10.2023**
(21) Application number: 19840511.0
(22) Date of filing: 09.05.2019
(51) Int. Cl.: A47C 3/18, B60N 2/14

(54) **NON-CLEARANCE LOCKING MECHANISM OF ROTATING SEAT**
SPIELFREIER VERRIEGELUNGSMECHANISMUS FÜR EINEN DREHSITZ
MÉCANISME DE VERROUILLAGE SANS JEU DE SIÈGE ROTATIF

(30) Priority: 27.07.2018 CN 201821204863 U
(43) Date of publication of application: 09.06.2021
(73) Proprietor: Yanfeng International Seating Systems Co., Ltd., Shanghai 201315 (CN)
(72) Inventor: FENG, Qingwei, Shanghai 201315 (CN); DING, Jiabin, Shanghai 201315 (CN); ZHU, Feixiang, Shanghai 201315 (CN)
(74) Representative: Schweiger, Martin
(86) International application number: PCT/CN2019/086226
(87) International publication number: WO 2020/019826

(56) References cited:
- CN-A- 104 924 926
- CN-A- 107 953 806
- CN-A- 107 953 806
- CN-A- 108 968 465
- CN-U- 205 041 032
- CN-U- 205 685 224
- CN-U- 206 107 010
- CN-U- 207 725 260
- JP-A- H10 109 575
- US-A1- 2008 211 284

## Description

### BACKGROUND

### Technical Field

The present invention relates to the technical field of seats, and in particular, to a rotary seat zero-clearance locking mechanism.

### Related Art

Currently, for a rotating seat, there are mainly the following several locking mechanisms:
1. The locking mechanism implements locking by inserting a claw-shaped or tooth-shaped member in whole into a corresponding lockhole. There is a fit clearance between a contour of the claw-shaped member or the tooth-shaped member and a contour of the lockhole, which generates noise and shake in a driving process, and this type of technology is mainly represented in "COMMERCIAL VEHICLE SEAT WITH LOCKING PIECE" disclosed in Chinese Patent Authorized Publication No. CN103863151B, "ROTATING DISC FOR CAR SEAT" disclosed in Chinese Patent Application No. CN106427682A, the document disclosed in Korean Application No. KR100799874B1, and "NOVEL ROTATOR MECHANISM OF ROTATING SEAT" disclosed in Chinese Patent Application No. CN102529756A.
2. The locking mechanism implements locking by inserting a cylindrical pin into a hole between a fixed disc and a rotating disc from bottom to top. Similarly, there is also a fit clearance between a single hole and a shaft, which generates noise and shake in a driving process. This type of technology is mainly represented in "SEAT ROTATION MECHANISM" disclosed in Chinese Patent Application No. CN104670256A and "ROTATING CAR SEAT" disclosed in Chinese Patent Authorized Publication No. CN206520509U.

The document CN 107 953 806 A discloses a rotating mechanism for an automobile seat, comprising a connecting plate connected with a seat, a movable disk located under the connecting plate and fixedly connected with the connecting plate; a fixed disk located under the movable disk and connected with an upper sliding rail in a seat sliding rail assembly; a compression disk located above the movable disk and fixedly connected with the fixed disk; an upper ball bearing assembly located at the compression disk and a movable disk support; and a lower ball bearing assembly located between the movable disk and the fixed disk.

### SUMMARY

A technical problem to be solved by the present invention is to provide a rotary seat zero-clearance locking mechanism in response to the deficiencies existing in the prior art, and the rotary seat zero-clearance locking mechanism eliminates a fit clearance existing after a rotation mechanism is locked, improves a grade of a product, and improves user experience.

The technical problem to be solved by the present invention may be implemented by the following technical solutions.

A rotary seat zero-clearance locking mechanism includes a locking mechanism mounted on a rotating disc in a seat rotation mechanism and at least one lockhole disposed on an outer circumference of a fixed disc in the seat rotation mechanism, where the locking mechanism includes:
a lock support fixed on the rotating disc; and
at least two lock pins horizontally and moveably configured in the lock support, where a first end of the lock pin is of a truncated-cone-shaped structure; and the first end of the lock pin is inserted into the lockhole, to implement zero-clearance locking by using wedging between the truncated-cone-shaped structure of the first end of the lock pin and the lockhole.

According to the present invention, the rotary seat zero-clearance locking mechanism further includes a lock pin return spring sleeved on each lock pin, where when the lock pin return spring is in a locked state, the first end of the lock pin is inserted, under the action of the lock pin return spring, into the lockhole on the outer circumference of the fixed disc to lock the rotating disc.

According to the present invention, the rotary seat zero-clearance locking mechanism further includes a release lever hinged to a top surface of the lock support through a release lever rotating shaft, where the release lever includes a release end and an operation end, the release lever is driven by operating the operation end of the release lever to rotate, and the release end of the release lever drives the lock pin to move toward a release direction, so that the first end of the lock pin exits from the lockhole on the outer circumference of the fixed disc to release the rotating disc; and
a release lever return spring connected to the release lever and the lock support or the rotating disc, where the release lever return spring drives the release lever to return to the locked state; and during releasing, the release lever return spring accumulates energy.

In an exemplary embodiment of the present invention, at least one outward protruding portion is disposed on the outer circumference of the fixed disc, the lockhole is disposed on each outward protruding portion, each outward protruding portion is transitionally connected to the remaining part of the outer circumference of the fixed disc through an arc-shaped guiding plane, the first end of the lock pin is not in contact with the remaining part of the outer circumference of the fixed disc before entering the arc-shaped guiding plane, and the first end of the lock pin is in contact with the arc-shaped guiding plane after entering the arc-shaped guiding plane.

According to the present invention, a silencing cap is sleeved on a tip of the first end of the lock pin, and the silencing cap is in contact with the outer circumference of the fixed disc.

In an exemplary embodiment of the present invention, a buffer component is fixed to the release lever, and in the locked state, the release lever is in contact with the lock support through the buffer component, to eliminate noise generated due to a jolt of the release lever in a running process.

In an exemplary embodiment of the present invention, the lock support includes a first end surface close to the outer circumference of the fixed disc, a second end surface disposed opposite to the first end surface, and a top surface connecting the first end surface and the second end surface; at least two first lock pin protruding holes are disposed on the first end surface, at least two second lock pin protruding holes are disposed on the second end surface, and the first lock pin protruding holes on the first end surface and the second lock pin protruding holes on the second end surface are in a one-to-one correspondence and coaxial; and a first end and a second end of each lock pin respectively protrude from a corresponding first lock pin protruding hole and a corresponding second lock pin protruding hole.

In an exemplary embodiment of the present invention, a releasing plate is fixed to each lock pin, one end of the lock pin return spring is in contact with the releasing plate, and the other end is in contact with the first end surface or the second end surface; in the locked state, the release end of the release lever is not in contact with the releasing plate, in a released state, the release end of the release lever is in contact with the releasing plate and drives the lock pin, through the releasing plate, to move toward the release direction, and when the release lever is located at a middle position, the release end of the release lever is in contact with the releasing plate and drives the lock pin, through the releasing plate, to move toward the release direction.

In an exemplary embodiment of the present invention, at least two releasing shifting forks are disposed at the release end of the release lever, each releasing shifting fork corresponds to one lock pin, in the locked state, the releasing shifting fork is not in contact with the releasing plate, in the released state, the releasing shifting fork is in contact with the releasing plate and drives the lock pin, through the releasing plate, to move toward the release direction, and when the release lever is located at the middle position, the releasing shifting fork is in contact with the releasing plate and drives the lock pin, through the releasing plate, to move toward the release direction.

Since the foregoing technical solutions are used, compared with the prior art, the present invention has the following advantages:
(1) Locking in a Y direction is implemented by using two independent lock pins.
(2) Zero clearance is implemented by using a wedging principle of the truncated cones at the first ends of the two lock pins.
(3) A buffer component is disposed between the release lever and the lock support, to eliminate noise generated due to a jolt of the release lever in a running process.

The present invention eliminates a fit clearance existing after a rotation mechanism is locked, improves a grade of a product, and improves user experience.

### BRIEF DESCRIPTION OF THE DRAWINGS

FIG. 1 is a three-dimensional schematic diagram of assembling between a locking mechanism and a seat rotation mechanism according to the present invention.
FIG. 2 is a schematic sectional view of a locked state between the locking mechanism and the seat rotation mechanism according to the present invention.
FIG. 3 is a three-dimensional schematic diagram of the locked state between the locking mechanism and the seat rotation mechanism according to the present invention.
FIG. 4 is a schematic enlarged view of a part I in FIG. 3.
FIG. 5 is a schematic sectional view of the assembling between the locking mechanism and the seat rotation mechanism according to the present invention.
FIG. 6 is a schematic diagram of a state that a lock pin in the locking mechanism enters an arc-shaped guiding plane according to the present invention.
FIG. 7 is a schematic diagram of a state that a lock pin in the locking mechanism is inserted into a lockhole according to the present invention.
FIG. 8 is a schematic diagram of a state that another lock pin in the locking mechanism is aligned with a lockhole according to the present invention.
FIG. 9 is a schematic diagram of a state that two lock pins in the locking mechanism are inserted into a lockhole according to the present invention.

It should be noted that the silencing cap that is demanded by claim 1 is not shown in the drawings.

### DETAILED DESCRIPTION

The following describes the present invention in detail with reference to the accompanying drawings and specific implementations.

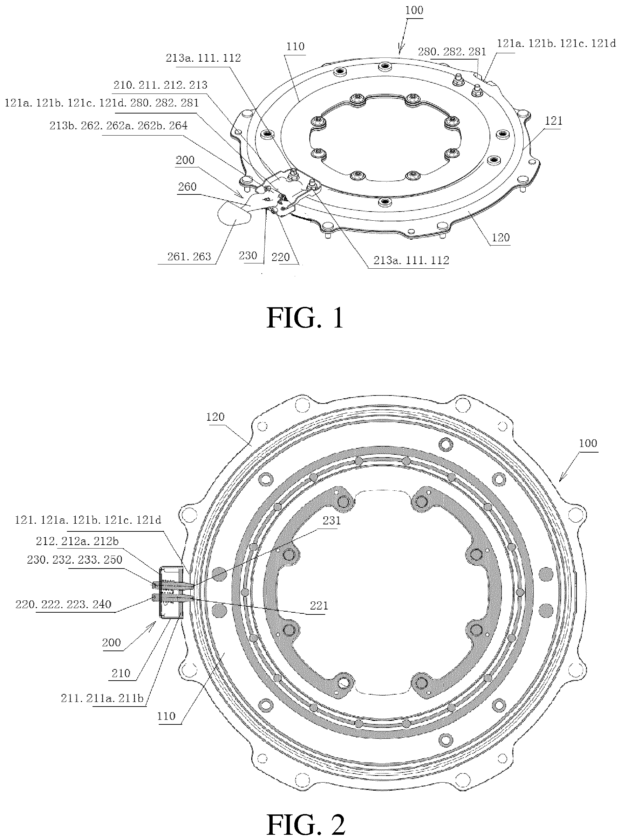

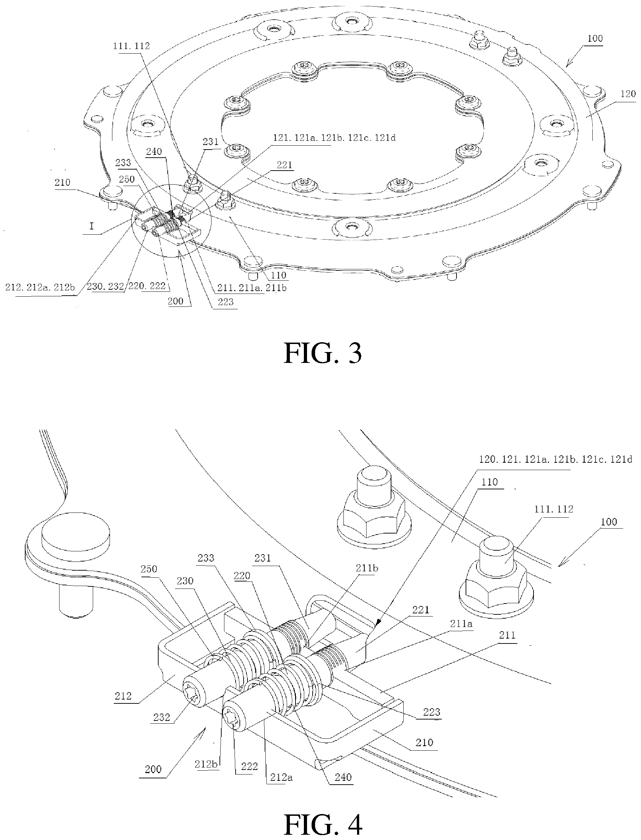

Referring to FIG. 1 to FIG. 5, a rotary seat zero-clearance locking mechanism is shown, including a locking mechanism 200, where the locking mechanism 200 is mounted on a rotating disc 110 in a seat rotation mechanism 100 to rotate along with the rotating disc 110. Two lockholes 121a are uniformly disposed on an outer circumference 121 of a fixed disc 120 in the seat rotation mechanism 100, and a central angle between the two lockholes 121a is 180°. Each lockhole 121a is a kidney-shaped lockhole, to accommodate two lock pins at the same time.

The locking mechanism 200 includes a lock support 210, two lock pins 220 and 230, two lock pin return springs 240 and 250, a release lever 260, and a release lever return spring 270.

The lock support 210 includes a first end surface 211 close to the outer circumference 121 of the fixed disc 120, a second end surface 212 disposed opposite to the first end surface 211, and a top surface 213 connecting the first end surface 211 and the second end surface 212.

Two through holes 213a are disposed at one end, close to the center of the seat rotation mechanism 100, of the top surface 213, two bolts 111 are fixed to the rotating disc 110 at the same time, and nuts 112 are tightened after the two bolts 111 passes through the two through holes 213a, to fixedly mount the locking mechanism 200 to the rotating disc 110.

Two first lock pin protruding holes 211a and 211b are disposed on the first end surface 211 of the lock support 210, and two second lock pin protruding holes 212a and 212b are disposed on the second end surface 212 of the lock support 210. The first lock pin protruding hole 211a on the first end surface 211 and the second lock pin protruding hole 212a on the second end surface 212 are coaxial, and the first lock pin protruding hole 211b on the first end surface 211 and the second lock pin protruding hole 212b on the second end surface 212 are coaxial. A first end 221 and a second end 222 of one lock pin 220 respectively protrude from the corresponding first lock pin protruding hole 211a and the corresponding second lock pin protruding hole 212a, and a first end 231 and a second end 232 of the other lock pin 230 respectively protrude from the corresponding first lock pin protruding hole 211b and the corresponding second lock pin protruding hole 212b. Each of the first ends 221 and 231 of the two lock pins 220 and 230 is of a truncated-cone-shaped structure.

Releasing plates 223 and 233 are respectively fixed to the two lock pins 220 and 230, and the two lock pin return springs 240 and 250 are respectively sleeved on the two lock pins 220 and 230. If the two lock pin return springs 240 and 250 are tension springs (as shown in FIG. 10 and FIG. 11), two ends of the two lock pin return springs 240 and 250 are respectively in contact with the releasing plates 223 and 233, and the other two ends of the two lock pin return springs 240 and 250 are both in contact with the first end surface 211 of the lock support 210. If the two lock pin return springs 240 and 250 are compression springs, two ends of the two lock pin return springs 240 and 250 are respectively in contact with the releasing plates 223 and 233, and the other two ends of the two lock pin return springs 240 and 250 are both in contact with the second end surface 212 of the lock support 210 (as shown in FIG. 13). In a locked state, the first ends of the two lock pins 220 and 230 are inserted, under the action of the two lock pin return springs 240 and 250, into the lockhole 121a on the outer circumference 121 of the fixed disc 120 to lock the rotating disc 110.

The release lever 260 includes an operation end 261 and a release end 262, an operation lever sleeve 263 is mounted on the operation end 261, and two releasing shifting forks 262a and 262b extending downward may be disposed at the release end 262. A rectangular hole 213b is disposed on the top surface 213 of the lock support 210, and the two releasing shifting forks 262a and 262b extending downward of the release end 262 pass through the rectangular hole 213b and are respectively forked onto the two lock pins 220 and 230.

The release end 262 of the release lever 260 is hinged to the top surface 213 of the lock support 210 through a release lever rotating shaft 264. The release lever return spring 270 may be a torsion spring or a tension spring. If the release lever return spring is a torsion spring, the torsion spring is wound around the release lever rotating shaft 264, one end of the torsion spring acts on the release lever 260, and the other end acts on the top surface 213 of the lock support 210. In this embodiment, the release lever return spring 270 is a tension spring, one end of which is hooked to the release lever 260, and the other end of which is hooked to the lock support 210. In the locked state, the release lever return spring 270 may enable the release lever 260 to be at a locking position all the time. During releasing, the two releasing shifting forks 262a and 262b at the release end 262 of the release lever 260 drives, through the releasing plates 223 and 233, the two lock pins 220 and 230 to move toward a release direction, so that the first ends 221 and 231 of the two lock pins 220 and 230 exit from the lockhole 121a on the outer circumference 121 of the fixed disc 120 to release the rotating disc 110; and the release lever return spring 270 accumulates energy.

In this embodiment, a releasing process is that the operation end 261 of the release lever 260 is lifted up by using a hand, so that the release lever 260 rotates around the release lever rotating shaft 264; and the two releasing shifting forks 262a and 262b of the release end 262 of the release lever 260 drives, through the releasing plates 223 and 233, the two lock pins 220 and 230 to move toward the release direction, so that the first ends 221 and 231 of the two lock pins 220 and 230 exit from the lockhole 121a on the outer circumference 121 of the fixed disc 120 to release the rotating disc 110.

In addition, to eliminate noise generated due to a jolt of the release lever 260 in a running process, a buffer component 290 is fixed to the release lever 260. In the locked state, the release lever 260 is in contact with the lock support 210 through the buffer component 290, and the noise generated due to the jolt of the release lever 260 in the running process may be eliminated by fitting in with the release lever return spring 270.

To alleviate noise generated due to scraping between tips of the first ends 221 and 231 of the two lock pins 220 and 230 and the outer circumference 121 of the fixed disc 120 in a rotation process, two methods may be used in this embodiment to solve the problem: One method is that a silencing cap (not shown) is sleeved on the tips of the first ends 221 and 231 of the two lock pins 220 and 230, and the silencing cap is in contact with the outer circumference 121 of the fixed disc 120. The other method is that two outward protruding portions 121b distributed at 180° are disposed on the outer circumference 121 of the fixed disc 120, each lockhole 121a is disposed on each outward protruding portion 121b, and each outward protruding portion 121b is transitionally connected to the remaining part of the outer circumference 121 of the fixed disc 120 through arc-shaped guiding planes 121c and 121d. Before entering the arc-shaped guiding planes 121c and 121d, the first ends 221 and 231 of the two lock pins 220 and 230 are not in contact with the remaining part of the outer circumference 121 of the fixed disc 120, and the first ends 221 and 231 of the two lock pins 220 and 230 are in contact with the arc-shaped guiding planes 121c and 121d only after entering the arc-shaped guiding planes 121c and 121d. In this way, lengths of the tips of the first ends 221 and 231 of the two lock pins 220 and 230 that are in contact with the outer circumference 121 of the fixed disc 120 are reduced, thereby effectively reducing noise generated due to scraping.

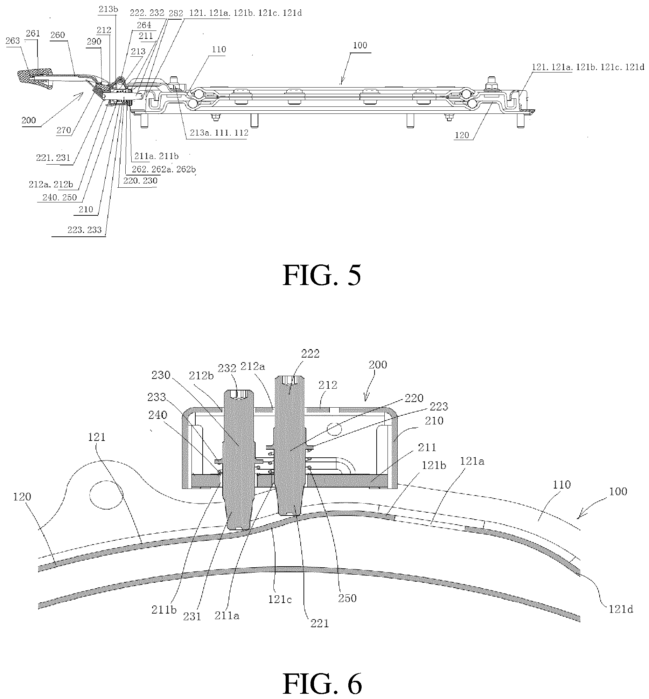

Referring to FIG. 6, before the rotating disc 110 rotates to the locking position, the first ends 221 and 231 of the two lock pins 220 and 230 first enter the arc-shaped guiding plane 121c. In this case, neither of the first ends 221 and 231 of the two lock pins 220 and 230 is aligned with the lockhole 121a, and the first ends 221 and 231 of the two lock pins 220 and 230 butt against and slide on the arc-shaped guiding plane 121c of the outer circumference 121 of the fixed disc 120.

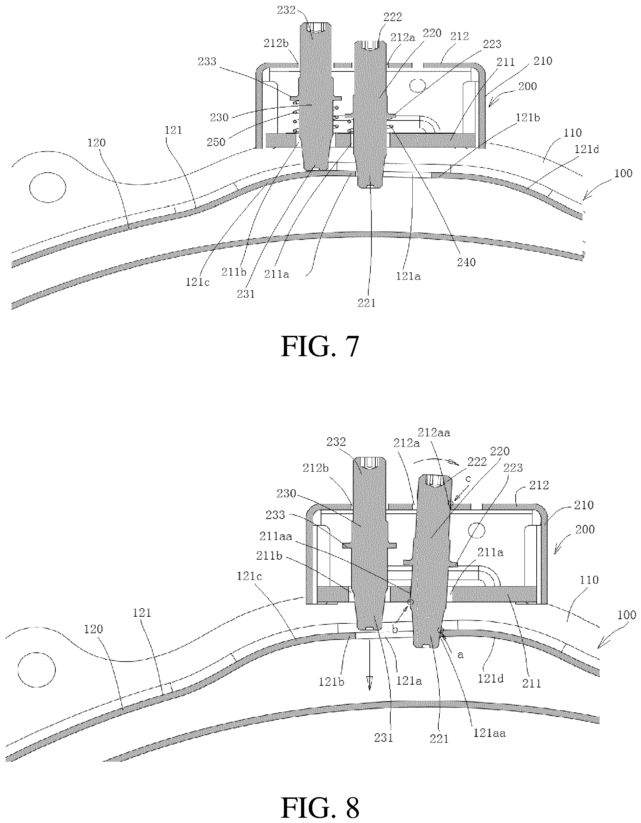

Referring to FIG. 7, with continuous rotation of the rotating disc 110, when the first end 221 of the first lock pin 220 is aligned with the lockhole 121a, under the action of restoring force of the lock pin return spring 240, the first end 221 of the first lock pin 220 is ejected and inserted into the lockhole 121a, and the first end 231 of the second lock pin 230 continues to butt against and slide on the arc-shaped guiding plane 121c of the outer circumference 121 of the fixed disc 120.

Referring to FIG. 8, with the continuous rotation of the rotating disc 110, the first end 231 of the second lock pin 230 is also aligned with the lockhole 121a. In this case, the first end 221 of the first lock pin 220 has come into contact with a hole wall 121aa on one side of the lockhole 121a, and deflects under the action of the hole wall 121aa on this side to make room for insertion of the first end 231 of the second lock pin 230 into the lockhole 121a, and under the action of restoring force of the lock pin return spring 250, the first end 231 of the second lock pin 230 is ejected and inserted into the lockhole 121a.

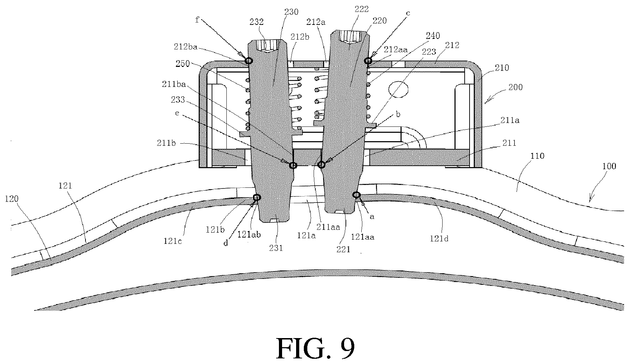

Referring to FIG. 9, with the continuous rotation of the rotating disc 110, the first ends 221 and 231 of the two lock pins 220 and 230 are both inserted into the lockhole 121a and tilt respectively as shown in FIG. 13. The first end 221 of the lock pin 220 forms two contact points a and b with the hole wall 121aa of the lockhole 121a and a hole wall 211aa of the first lock pin protruding hole 211a on the first end surface 211 of the lock support 210, and the second end 222 of the lock pin 220 forms a third contact point c with a hole wall 212aa of the second lock pin protruding hole 212a on the second end surface 212 of the lock support 210. Besides, the first end 231 of the lock pin 230 forms two contact points d and e with a hole wall 121ab of the lockhole 121a and a hole wall 211ba of the first lock pin protruding hole 211b on the first end surface 211 of the lock support 210, and the second end 232 of the lock pin 230 forms a third contact point f with a hole wall 213ba of the second lock pin protruding hole 213b on the second end surface 212 of the lock support 210. The two lock pins 220 and 230 wedge the fixed disc 120 and the rotating disc 110 together through the six contact points a, b, c, d, e, and f, thereby effectively eliminating a fit clearance existing after the rotation mechanism is locked, improving a grade of a product, and improving user experience.

## Claims

1. A rotary seat zero-clearance locking mechanism, comprising a locking mechanism (200) mounted on a rotating disc (110) in a seat rotation mechanism (100) and at least one lockhole (121a) disposed on an outer circumference (121) of a fixed disc (120) in the seat rotation mechanism (100), wherein the locking mechanism (200) comprises:
a lock support (210) fixed on the rotating disc (110);
at least two lock pins (220, 230) horizontally and moveably configured in the lock support (210), wherein a first end (221, 231) of the lock pin (220, 230) is of a truncated-cone-shaped structure; and the first end (221, 231) of the lock pin (220, 230) is inserted into the lockhole (121a), to implement zero-clearance locking by using wedging between the truncated-cone-shaped structure of the first end (221, 231) of the lock pin (220, 230) and the lockhole (121a),
a lock pin return spring (240, 250) sleeved on each lock pin (220, 230), wherein when the lock pin return spring (240, 250) is in a locked state, the first end (221, 231) of the lock pin (220, 230) is inserted, under the action of the lock pin return spring (240, 250), into the lockhole (121a) on the outer circumference (121) of the fixed disc (120) to lock the rotating disc (110),
a release lever (260) hinged to a top surface (213) of the lock support (210) through a release lever rotating shaft (264), wherein the release lever (260) comprises a release end (262) and an operation end, the release lever (260) is driven by operating the operation end of the release lever (260) to rotate, and the release end (262) of the release lever (260) drives the lock pin (220, 230) to move toward a release direction, so that the first end (221, 231) of the lock pin (220, 230) exits from the lockhole (121a) on the outer circumference (121) of the fixed disc (120) to release the rotating disc (110); and
a release lever return spring (270) connected to the release lever (260) and the lock support (210) or the rotating disc (110), wherein the release lever return spring (270) drives the release lever (260) to return to the locked state; and during releasing, the release lever return spring (270) accumulates energy,
**characterized in that**
a silencing cap is sleeved on a tip of the first end (221, 231) of the lock pin (220, 230), and the silencing cap is in contact with the outer circumference (121) of the fixed disc (120).

2. The rotary seat zero-clearance locking mechanism according to claim 1, wherein at least one outward protruding portion (121b) is disposed on the outer circumference (121) of the fixed disc (120), the lockhole (121a) is disposed on each outward protruding portion (121b), each outward protruding portion (121b) is transitionally connected to the remaining part of the outer circumference (121) of the fixed disc (120) through an arc-shaped guiding plane (121c, 121d), the first end (221, 231) of the lock pin (220, 230) is not in contact with the remaining part of the outer circumference (121) of the fixed disc (120) before entering the arc-shaped guiding plane (121c, 121d), and the first end (221, 231) of the lock pin (220, 230) is in contact with the remaining part of the outer circumference (121) of the fixed disc (120) after entering the arc-shaped guiding plane (121c, 121d).

3. The rotary seat zero-clearance locking mechanism according to claim 1, wherein a buffer component (290) is fixed to the release lever (260), and in the locked state, the release lever (260) is in contact with the lock support (210) through the buffer component (290), to eliminate noise generated due to a jolt of the release lever (260) in a running process.

4. The rotary seat zero-clearance locking mechanism according to claim 3, wherein the lock support (210) comprises a first end surface (211) close to the outer circumference (121) of the fixed disc (120), a second end surface (212) disposed opposite to the first end surface (212), and a top surface (213) connecting the first end surface (211) and the second end surface (212); at least two first lock pin protruding holes (211a, 211b) are disposed on the first end surface (211), at least two second lock pin protruding holes (212a, 212b) are disposed on the second end surface (212), and the first lock pin protruding holes (211a, 211b) on the first end surface (211) and the second lock pin protruding holes (212a, 212b) on the second end surface (212) are in a one-to-one correspondence and coaxial; and a first end (221, 231) and a second end of each lock pin (220, 230) respectively protrude from a corresponding first lock pin protruding hole (211a, 211b) and a corresponding second lock pin protruding hole (212a, 212b).

5. The rotary seat zero-clearance locking mechanism according to claim 4, wherein a releasing plate (223, 233) is fixed to each lock pin (220, 230), one end of the lock pin return spring (240, 250) is in contact with the releasing plate (223, 233) and the other end is in contact with the first end surface (211) or the second end surface (212); in the locked state, the release end (262) of the release lever (260) is not in contact with the releasing plate (223, 233), in a released state, the release end (262) of the release lever (260) is in contact with the releasing plate (223, 233) and drives the lock pin (220, 230), through the releasing plate (223, 233), to move toward the release direction, and when the release lever (260) is located at a middle position, the release end (262) of the release lever (260) is in contact with the releasing plate (223, 233) and drives the lock pin (220, 230), through the releasing plate (223, 233), to move toward the release direction.

6. The rotary seat zero-clearance locking mechanism according to claim 1, wherein at least two releasing shifting forks (262a, 262b) are disposed at the release end (262) of the release lever (260), each releasing shifting fork (262a, 262b) corresponds to one lock pin (220, 230), in the locked state, the releasing shifting fork (262a, 262b) is not in contact with the releasing plate (223, 233), in the released state, the releasing shifting fork (262a, 262b) is in contact with the releasing plate (223, 233) and drives the lock pin (220, 230), through the releasing plate (223, 233), to move toward the release direction, and when the release lever (260) is located at the middle position, the releasing shifting fork (262a, 262b) is in contact with the releasing plate (223, 233) and drives the lock pin (220, 230), through the releasing plate (223, 233), to move toward the release direction.

## Patentansprüche

1. Spielfreier Drehsitz-Verriegelungsmechanismus, aufweisend einen Verriegelungsmechanismus (200), der an einer Drehscheibe (110) in einem Sitzdrehmechanismus (100) angebracht ist, und mindestens ein Verriegelungsloch (121a), das an einem Außenumfang (121) einer feststehenden Scheibe (120) in dem Sitzdrehmechanismus (100) angeordnet ist, wobei der Verriegelungsmechanismus (200) aufweist:
einen an der Drehscheibe (110) befestigten Verriegelungsträger (210);
mindestens zwei Verriegelungsstifte (220, 230), die horizontal und beweglich in dem Verriegelungsträger (210) angeordnet sind, wobei ein erstes Ende (221, 231) des Verriegelungsstifts (220, 230) eine kegelstumpfförmige Struktur besitzt und das erste Ende (221, 231) des Verriegelungsstifts (220, 230) in das Verriegelungsloch (121a) eingeführt ist, um eine spielfreie Verriegelung durch Verwendung einer Verkeilung zwischen der kegelstumpfförmigen Struktur des ersten Endes (221, 231) des Verriegelungsstifts (220, 230) und dem Verriegelungsloch (121a) zu implementieren,
eine Verriegelungsstift-Rückstellfeder (240, 250), die auf jeden Verriegelungsstift (220, 230) aufgesteckt ist, wobei, wenn sich die Verriegelungsstift-Rückstellfeder (240, 250) in einem verriegelten Zustand befindet, das erste Ende (221, 231) des Verriegelungsstifts (220, 230) unter der Wirkung der Verriegelungsstift-Rückstellfeder (240, 250) in das Verriegelungsloch (121a) an dem Außenumfang (121) der feststehenden Scheibe (120) eingeführt ist, um die Drehscheibe (110) zu verriegeln,
einen Freigabehebel (260), der durch eine Freigabehebeldrehwelle (264) drehbar an einer oberen Fläche (213) des Verriegelungsträgers (210) angebracht ist, wobei der Freigabehebel (260) ein Freigabeende (262) und ein Betätigungsende aufweist, wobei der Freigabehebel (260) angetrieben wird durch Betätigen des Betätigungsendes des Freigabehebels (260), um sich zu drehen, und das Freigabeende (262) des Freigabehebels (260) den Verriegelungsstift (220, 230) antreibt, um sich in eine Freigaberichtung zu bewegen, so dass das erste Ende (221, 231) des Verriegelungsstifts (220, 230) aus dem Verriegelungsloch (121a) an dem Außenumfang (121) der feststehenden Scheibe (120) austritt, um die Drehscheibe (110) freizugeben; und
eine Freigabehebel-Rückstellfeder (270), die mit dem Freigabehebel (260) und dem Verriegelungsträger (210) oder der Drehscheibe (110) verbunden ist, wobei die Freigabehebel-Rückstellfeder (270) den Freigabehebel (260) antreibt, um in den verriegelten Zustand zurückzukehren; und wobei während des Freigebens die Freigabehebel-Rückstellfeder (270) Energie ansammelt,
**dadurch gekennzeichnet, dass**
eine Geräuschdämpfungskappe auf eine Spitze des ersten Endes (221, 231) des Verriegelungsstifts (220, 230) aufgesteckt ist und die Geräuschdämpfungskappe in Kontakt mit dem Außenumfang (121) der feststehenden Scheibe (120) steht.

2. Spielfreier Drehsitz-Verriegelungsmechanismus nach Anspruch 1, wobei mindestens ein nach außen vorstehender Abschnitt (121b) an dem Außenumfang (121) der feststehenden Scheibe (120) angeordnet ist, das Verriegelungsloch (121a) an jedem nach außen vorstehenden Abschnitt (121b) angeordnet ist, jeder nach außen vorstehende Abschnitt (121b) übergangsmäßig mit dem verbleibenden Teil des Außenumfangs (121) der feststehenden Scheibe (120) durch eine bogenförmige Führungsebene (121c, 121d) verbunden ist, das erste Ende (221, 231) des Verriegelungsstifts (220, 230) nicht in Kontakt mit dem verbleibenden Teil des Außenumfangs (121) der feststehenden Scheibe (120) ist, bevor es in die bogenförmige Führungsebene (121c, 121d) eintritt, und das erste Ende (221, 231) des Verriegelungsstifts (220, 230) in Kontakt mit dem verbleibenden Teil des Außenumfangs (121) der feststehenden Scheibe (120) ist, nachdem es in die bogenförmige Führungsebene (121c, 121d) eintritt.

3. Spielfreier Drehsitz-Verriegelungsmechanismus nach Anspruch 1, wobei eine Pufferkomponente (290) an dem Freigabehebel (260) befestigt ist und der Freigabehebel (260) in dem verriegelten Zustand durch die Pufferkomponente (290) in Kontakt mit dem Verriegelungsträger (210) steht, um Geräusche zu eliminieren, die aufgrund eines Rucks des Freigabehebels (260) in einem laufenden Vorgang erzeugt werden.

4. Spielfreier Drehsitz-Verriegelungsmechanismus nach Anspruch 3, wobei der Verriegelungsträger (210) eine erste Endfläche (211) nahe dem Außenumfang (121) der feststehenden Scheibe (120), eine zweite Endfläche (212), die gegenüber der ersten Endfläche (212) angeordnet ist, und eine obere Fläche (213), die die erste Endfläche (211) und die zweite Endfläche (212) verbindet, aufweist; mindestens zwei erste Verriegelungsstift-Vorsprungslöcher (211a, 211b) an der ersten Endfläche (211) angeordnet sind, mindestens zwei zweite Verriegelungsstift-Vorsprungslöcher (212a, 212b) an der zweiten Endfläche (212) angeordnet sind, und die ersten Verriegelungsstift-Vorsprungslöcher (211a, 211b) an der ersten Endfläche (211) und die zweiten Verriegelungsstift-Vorsprungslöcher (212a, 212b) an der zweiten Endfläche (212) in einer Eins-zu-Eins-Entsprechung und koaxial sind; und ein erstes Ende (221, 231) und ein zweites Ende jedes Verriegelungsstifts (220, 230) aus einem entsprechenden ersten Verriegelungsstift-Vorsprungsloch (211a, 211b) bzw. einem entsprechenden zweiten Verriegelungsstift-Vorsprungsloch (212a, 212b) herausragen.

5. Spielfreier Drehsitz-Verriegelungsmechanismus nach Anspruch 4, wobei eine Freigabeplatte (223, 233) an jedem Verriegelungsstift (220, 230) befestigt ist, ein Ende der Verriegelungsstift-Rückstellfeder (240, 250) in Kontakt mit der Freigabeplatte (223, 233) ist und das andere Ende in Kontakt mit der ersten Endfläche (211) oder der zweiten Endfläche (212) ist; in dem verriegelten Zustand das Freigabeende (262) des Freigabehebels (260) nicht in Kontakt mit der Freigabeplatte (223, 233) ist, in einem freigegebenen Zustand das Freigabeende (262) des Freigabehebels (260) in Kontakt mit der Freigabeplatte (223, 233) ist und den Verriegelungsstift (220, 230) durch die Freigabeplatte (223, 233) antreibt, um sich in die Freigaberichtung zu bewegen, und wenn sich der Freigabehebel (260) in einer mittleren Position befindet, das Freigabeende (262) des Freigabehebels (260) in Kontakt mit der Freigabeplatte (223, 233) ist und den Verriegelungsstift (220, 230) durch die Freigabeplatte (223, 233) antreibt, um sich in die Freigaberichtung zu bewegen.

6. Spielfreier Drehsitz-Verriegelungsmechanismus nach Anspruch 1, wobei an dem Freigabeende (262) des Freigabehebels (260) mindestens zwei Freigabeschaltgabeln (262a, 262b) angeordnet sind, jede Freigabeschaltgabel (262a, 262b) einem Verriegelungsstift (220, 230) entspricht, in dem verriegelten Zustand die Freigabeschaltgabel (262a, 262b) nicht in Kontakt mit der Freigabeplatte (223, 233) ist, in dem freigegebenen Zustand die Freigabeschaltgabel (262a, 262b) in Kontakt mit der Freigabeplatte (223, 233) ist und den Verriegelungsstift (220, 230) durch die Freigabeplatte (223, 233) antreibt, um sich in die Freigaberichtung zu bewegen, und wenn sich der Freigabehebel (260) in der mittleren Position befindet, die Freigabeschaltgabel (262a, 262b) in Kontakt mit der Freigabeplatte (223, 233) ist und den Verriegelungsstift (220, 230) durch die Freigabeplatte (223, 233) antreibt, um sich in die Freigaberichtung zu bewegen.

## Revendications

1. Mécanisme de verrouillage sans jeu de siège rotatif, comprenant un mécanisme de verrouillage (200) monté sur un disque rotatif (110) dans un mécanisme de rotation du siège (100) et au moins un trou de verrouillage (121a) disposé sur une circonférence extérieure (121) d'un disque fixe (120) dans le mécanisme de rotation du siège (100), dans lequel le mécanisme de verrouillage (200) comprend :
un support de verrouillage (210) fixé sur le disque rotatif (110) ;
au moins deux goupilles de verrouillage (220, 230) configurées horizontalement et de manière mobile dans le support de verrouillage (210), dans lequel une première extrémité (221, 231) de la goupille de verrouillage (220, 230) a une structure tronconique ; et la première extrémité (221, 231) de la goupille de verrouillage (220, 230) est insérée dans le trou de verrouillage (121a), pour mettre en oeuvre un verrouillage sans jeu en utilisant un calage entre la structure tronconique de la première extrémité (221, 231) de la goupille de verrouillage (220, 230) et le trou de verrouillage (121a),
un ressort de rappel de goupille de verrouillage (240, 250) manchonné sur chaque goupille de verrouillage (220, 230), dans lequel, lorsque le ressort de rappel de goupille de verrouillage (240, 250) est à un état verrouillé, la première extrémité (221, 231) de la goupille de verrouillage (220, 230) est insérée, sous l'action du ressort de rappel de goupille de verrouillage (240, 250), dans le trou de verrouillage (121a) sur la circonférence extérieure (121) du disque fixe (120) afin de verrouiller le disque rotatif (110),
un levier de déverrouillage (260) articulé à une surface supérieure (213) du support de verrouillage (210) par un arbre rotatif de levier de déverrouillage (264), dans lequel le levier de déverrouillage (260) comprend une extrémité de déverrouillage (262) et une extrémité d'actionnement, le levier de déverrouillage (260) est entraîné par actionner l'extrémité d'actionnement du levier de déverrouillage (260) à tourner, et l'extrémité de déverrouillage (262) du levier de déverrouillage (260) entraîne la goupille de verrouillage (220, 230) à se déplacer vers une direction de déverrouillage, de sorte que la première extrémité (221, 231) de la goupille de verrouillage (220, 230) sort du trou de verrouillage (121a) sur la circonférence extérieure (121) du disque fixe (120) afin de déverrouiller le disque rotatif (110) ; et
un ressort de rappel de levier de déverrouillage (270) relié au levier de déverrouillage (260) et au support de verrouillage (210) ou au disque rotatif (110), dans lequel le ressort de rappel de levier de déverrouillage (270) entraîne le levier de déverrouillage (260) pour revenir à l'état verrouillé ; et pendant le déverrouillage, le ressort de rappel de levier de déverrouillage (270) accumule de l'énergie,
**caractérisé en ce**
**qu'**un capuchon insonorisé est manchonné sur une pointe de la première extrémité (221, 231) de la goupille de verrouillage (220, 230), et le capuchon insonorisé est en contact avec la circonférence extérieure (121) du disque fixe (120).

2. Mécanisme de verrouillage sans jeu de siège rotatif selon la revendication 1, dans lequel au moins une partie saillante vers l'extérieur (121b) est disposée sur la circonférence extérieure (121) du disque fixe (120), le trou de verrouillage (121a) est disposé sur chaque partie saillante vers l'extérieur (121b), chaque partie saillante vers l'extérieur (121b) est reliée de manière transitoire à la partie restante de la circonférence extérieure (121) du disque fixe (120) à travers un plan de guidage en forme d'arc (121c, 121d), la première extrémité (221, 231) de la goupille de verrouillage (220, 230) n'est pas en contact avec la partie restante de la circonférence extérieure (121) du disque fixe (120) avant d'entrer dans le plan de guidage en forme d'arc (121c, 121d), et la première extrémité (221, 231) de la goupille de verrouillage (220, 230) est en contact avec la partie restante de la circonférence extérieure (121) du disque fixe (120) après être entrée dans le plan de guidage en forme d'arc (121c, 121d).

3. Mécanisme de verrouillage sans jeu de siège rotatif selon la revendication 1, dans lequel un élément tampon (290) est fixé au levier de déverrouillage (260) et, à l'état verrouillé, le levier de déverrouillage (260) est en contact avec le support de verrouillage (210) par l'élément tampon (290), afin d'éliminer du bruit généré par une secousse du levier de déverrouillage (260) au cours d'un processus.

4. Mécanisme de verrouillage sans jeu de siège rotatif selon la revendication 3, dans lequel le support de verrouillage (210) comprend une première surface d'extrémité (211) proche de la circonférence extérieure (121) du disque fixe (120), une seconde surface d'extrémité (212) disposée à l'opposé de la première surface d'extrémité (212), et une surface supérieure (213) reliant la première surface d'extrémité (211) et la seconde surface d'extrémité (212) ; au moins deux premiers trous en saillie de la goupille de verrouillage (211a, 211b) sont disposés sur la première surface d'extrémité (211), au moins deux seconds trous en saillie de la goupille de verrouillage (212a, 212b) sont disposés sur la seconde surface d'extrémité (212), et les premiers trous en saillie de la goupille de verrouillage (211a, 211b) sur la première surface d'extrémité (211) et les seconds trous en saillie de la goupille de verrouillage (212a, 212b) sur la seconde surface d'extrémité (212) sont en correspondance biunivoque et coaxiaux ; et une première extrémité (221, 231) et une seconde extrémité de chaque goupille de verrouillage (220, 230) font respectivement saillie d'un premier trou en saillie de goupille de verrouillage correspondant (211a, 211b) et d'un second trou en saillie de goupille de verrouillage correspondant (212a, 212b).

5. Mécanisme de verrouillage sans jeu de siège rotatif selon la revendication 4, dans lequel une plaque de déverrouillage (223, 233) est fixée à chaque goupille de verrouillage (220, 230), une extrémité du ressort de rappel de goupille de verrouillage (240, 250) est en contact avec la plaque de déverrouillage (223, 233), et l'autre extrémité est en contact avec la première surface d'extrémité (211) ou la seconde surface d'extrémité (212) ; à l'état verrouillé, l'extrémité de déverrouillage (262) du levier de déverrouillage (260) n'est pas en contact avec la plaque de déverrouillage (223, 233), à un état déverrouillé, l'extrémité de déverrouillage (262) du levier de déverrouillage (260) est en contact avec la plaque de déverrouillage (223, 233) et entraîne la goupille de verrouillage (220, 230), par la plaque de déverrouillage (223, 233), pour se déplacer vers la direction de déverrouillage, et lorsque le levier de déverrouillage (260) se trouve dans une position intermédiaire, l'extrémité de déverrouillage (262) du levier de déverrouillage (260) est en contact avec la plaque de déverrouillage (223, 233) et entraîne la goupille de verrouillage (220, 230), par la plaque de déverrouillage (223, 233), pour se déplacer vers la direction de déverrouillage.

6. Mécanisme de verrouillage sans jeu de siège rotatif selon la revendication 1, dans lequel au moins deux fourchettes de déverrouillage (262a, 262b) sont disposées à l'extrémité de déverrouillage (262) du levier de déverrouillage (260), chaque fourchette de déverrouillage (262a, 262b) correspond à une goupille de verrouillage (220, 230), à l'état verrouillé, la fourchette de déverrouillage (262a, 262b) n'est pas en contact avec la plaque de déverrouillage (223, 233), à l'état déverrouillé, la fourchette de déverrouillage (262a, 262b) est en contact avec la plaque de déverrouillage (223, 233) et entraîne la goupille de verrouillage (220, 230), par la plaque de déverrouillage (223, 233), pour se déplacer vers la direction de déverrouillage, et lorsque le levier de déverrouillage (260) se trouve dans la position intermédiaire, la fourchette de déverrouillage (262a, 262b) est en contact avec la plaque de déverrouillage (223, 233) et entraîne la goupille de verrouillage (220, 230), par la plaque de déverrouillage (223, 233), pour se déplacer vers la direction de déverrouillage.
